# EUROPEAN PATENT APPLICATION

(11) **EP 0 911 742 A1**
(43) Date of publication of application: **28.04.1999**
(21) Application number: 97116912.3
(22) Date of filing: 30.09.1997
(51) Int. Cl.: G06F 17/21, B41J 1/00

(54) **Printing apparatus for printing fixed and automatically sized characters**

(71) Applicant: ESSELTE N.V., 9100 St. Niklaas (BE)
(72) Inventor: George, Ian, Cambridge CB1 3JH (GB)
(74) Representative: Franzen, Peter

(57) **Abstract**

The invention refers to a printing apparatus with means for inputting characters and character size data inputting means for selecting the size with which the inputted character data are printed. Selected characters can be printed with a fixed size, and other ones with an automatically determined size which depends on a lineage and a width of the image receiving medium.

In order to avoid that automatically sized characters are printed smaller than fixed size characters within the same line, what looks somewhat unadvantageous, it is proposed to print characters with an automatically determined size, which are located within a line with characters of fixed size, with a size corresponding to the larger one of
(a) the size of the largest character with fixed size within the same line, and
(b) the size of characters with automatically determined size.

## Description

The present invention relates to printing apparatus and in particular to the determination of the size of printed characters, when characters with fixed size and automatically determined size are printed within one line.

Known tape printing apparatus of the type with which the present invention is generally concerned are disclosed in EP-A-0 322 918 and EP-A-0 322 919 (Brother KK) and EP-A-0 267 890 (Varitronic). The printers each include a printing device having a cassette receiving bay for receiving a cassette or tape holding case. In EP-A-0 322 918, the tape holding case houses an ink ribbon, a transparent image receiving tape and a double-sided adhesive tape which is secured at one of its adhesive coated sides to the image tape after printing and which has a backing paper peelable from its other adhesive side. With both these apparatus, the image transfer medium (ink ribbon) and an image receiving tape (substrate) are in the same cassette.

The present applicants have developed a different type of tape printing apparatus which is described for example in EP-A-0 578 372. In this printing apparatus, the substrate tape is similar to that described in EP-A-0 267 890 but is housed in its own tape holding case while the ink ribbon is similarly housed in its own tape holding case.

In all of these cases, the image receiving tape passes in overlap with the ink ribbon to a print zone consisting of a fixed print head and a platen against which the print head can be pressed to cause an image to transfer from the ink ribbon to the image receiving tape. There are many ways doing this, including dry lettering or dry film impression, but the most usual way at present is by thermal printing where the print head is heated and the heat causes ink from the ink ribbon to be transferred to the ink receiving tape. Alternatively, the print head may be in direct contact with a thermally sensitive image receiving tape whereby when the print head is heated, an image is defined on the image receiving tape.

In EP-A-0 497 352, a tape printing apparatus is disclosed, which prints out the inputted characters according to a size which is input by the user. Printing is performed considering the largest character size, and the width of the presently inserted tape. Accordingly, an error message is given when the image does not fit onto the tape, and the lines which do not fit onto the tape are printed after the lines which fit onto the tape have been printed.

In EP-A-0 534 794, a tape printing apparatus is described, which determines the size of the printed characters according to the tape width detected considering tape width representation means of a cassette, the number of inputted lines, the number of characters within one line, and a desired length of a label inputted by the user. The tape printer according to EP-A-0 577 250 works similarly, but allows to print the input text in different blocks having different lineages.

US 5 322 375 describes a tape printer which offers the user to select the size with which inputted characters are printed out. One of the options is automatic, and determines the size such that the characters fill the available space on the print tape appropriately. The size depends on whether the text only consists of large scale characters and numbers (then the characters are as large as possible), or whether it contains small characters with parts extending under the baseline of the text, as a small 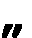 g". In the latter case, the characters are printed smaller due to the space required for the parts extending under the baseline. The remaining options for the size of the printed characters are fractions of the tape width.

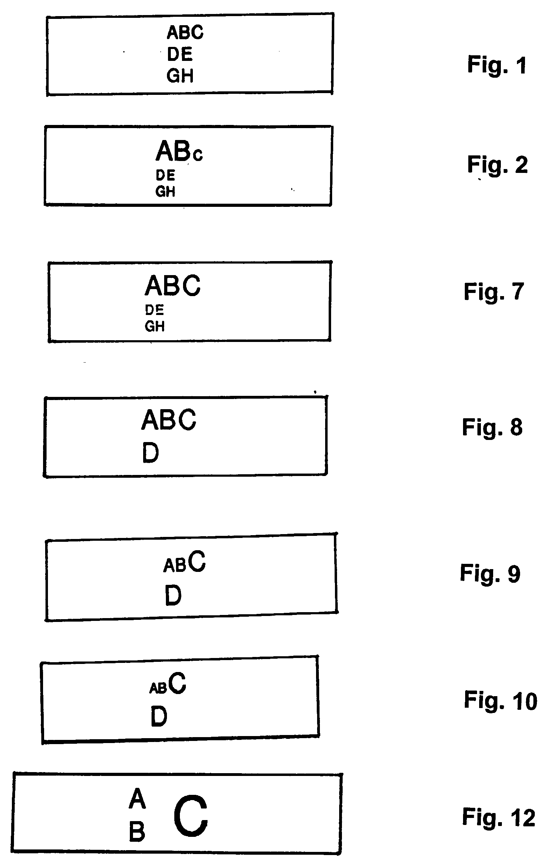

Known tape printers thus allow the user to select a fixed size for the text, or an automatic operation, wherein the appropriate size is automatically obtained. It is also possible to select a part of inputted characters, and to assign a fixed size to them, while the remaining characters are sized automatically. A sample of labels produced with a prior art printer which is sold by the present applicants under the trademark Dymo 6000 is given in Figures 1 and 2. In Figure 1, the printed text consists of three lines, each having a size of about 1/3 of the available tape width (ie. after the margins below and above the text were subtracted from the total tape width, which corresponds to 19 mm). Since the characters are sized automatically, they all have the same size. In Figure 2, the first two characters of the first line have been marked, and a user selected, fixed size was assigned to them. This fixed size corresponds to 1/2 of the available tape width, such that the characters 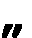 AB" are larger than the remaining ones, which now have a size of 1/4 of the available tape width. While the size of the two lower lines looks appropriate, the automatically sized 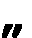 C" within the first line containing the fixed size characters looks somewhat unadvantageous, since it is much smaller than the remaining characters within the first line. Hence, the image looks somewhat unbecoming, when the user (eg. by accident) misses to mark an entire line when assigning a fixed size to it.

It is thus an object of the present invention to provide a tape printer which allows printing of mixed (fixed and automatically) sized characters and printing labels with a pleasant appearance. It is further an object of the invention to avoid erroneous size inputting operations in label printers, thus avoiding unwanted waste of printing tape.

According to the present invention, there is provided a printing apparatus comprising:
means for inputting characters to be printed onto an image receiving medium;
character size data inputting means for selecting the size with which the inputted character data are printed, the character size data inputting means being operable to assign a fixed size to selected characters; the character size data inputting means further being operable to assign an automatically determined size to selected characters;
printing means for printing the inputted characters onto the image receiving medium,
a controller for controlling the printing means, the controller being operable to control the printing means to print the characters with automatically determined size onto the image receiving medium, whereby the automatically determined size depends on a lineage and a width of the image receiving medium, the controller further being operable to control the printing means to print characters with a fixed size according to the selected fixed size onto the image receiving medium, characterized in that the controller is operable to control the printing means to print characters with an automatically determined size which are located within a line with characters with a fixed size, with a size corresponding to the larger one of
   (a) the size of the largest character with fixed size within the same line, and
   (b) the size of characters with automatically determined size.

The invention thus proposes to distinguish whether a character with automatically determined size is located within a line with fixed size characters, or not. When this is true, the respective character concerned obtains the larger one of the size of the largest one of the fixed size characters within the line concerned, or the other characters with automatically determined size. This automatically determined size is preferably the size of characters which are located in a line comprising only characters with automatically determined size.

Thus, the disadvantages of the prior art described in connection with Figure 2 are avoided. When the user indeed wants to print automatically sized characters smaller than the fixed size characters within the same line, he can still actively assign a fixed size, which is appropiately small, to the characters concerned.

In the case the printing apparatus is capable of printing different pages, ie. different parts of an image with optionally different lineages, the pages being printed one beneath the other and each page being constituted of one or more lines arranged one above the other, the automatically determined size is determined for each page separately, since the distinct pages can have different lineages. For this reason, then the size (b) is the size of characters with automatically determined size within the same page. When the printing apparatus on the other hand does not incorporate the concept of pages, the entire image can be considered for automatic sizing.

The characters within lines comprising only automatically determined characters are advantageously sized by dividing the height of the image receiving medium (optionally after subtractions of upper and lower margins) which is not occupied by lines with characters with a fixed size by the number of lines comprising only characters with automatically determined size. Thus, the space for automatic sizing is calculated (ie. those lines with fixed size characters are subtracted from the available tape width), and divided by the respective number of lines.

In some cases it can happen that a page (or an entire image) only comprises lines in which at least one character with fixed size is located, while one or more of the lines comprise characters with automatically determined size. Then, a size (b) of characters with automatically determined size (ie. which are located in a line comprising only characters with automatically determined size) can not be determined, since there is no line with only automatically sized characters. In this case, it is preferred to use the size of the largest fixed size character within the same line for the characters with automatically determined size.

It should be noted that the width of the image receiving medium can be inputted by the user, or automatically detected.

Further, it is preferred that characters to which no fixed size is assigned by the user are printed with an automatically determined size. Thus, an automatically determined size is considered as a default, making user errors less probable.

Preferably, the image receiving medium is an image receiving tape. It should be noted that the invention can be used for stencil production devices, of the type disclosed in EP-A-0 598 710, as well.

For a better understanding of the present invention and as to show how the same may be carried into effect, reference will now be made to the accompagnying drawings in which:
Figure 1 is a sample label printed with a known printing apparatus, wherein the size of all characters is automatically determined;
Figure 2 is a sample label printed with a known printing apparatus, wherein the size of the characters A and B is fixed;
Figure 3 is a plan view showing the front of a tape printing apparatus;
Figure 4 is a plan view showing two cassettes inserted in the tape printing apparatus of Figure 3;
Figure 5 is a simplified block diagram of control circuitry for controlling the tape printing apparatus of Figure 3;
Figure 6 shows the menu displayed when the size key is actuated;
Figures 7 - 10 show labels printed with a tape printing apparatus according to the present invention;
Figure 11 is a flow diagram showing how the size of the printed characters is determined;
Figure 12 shows a label with two distinct pages.

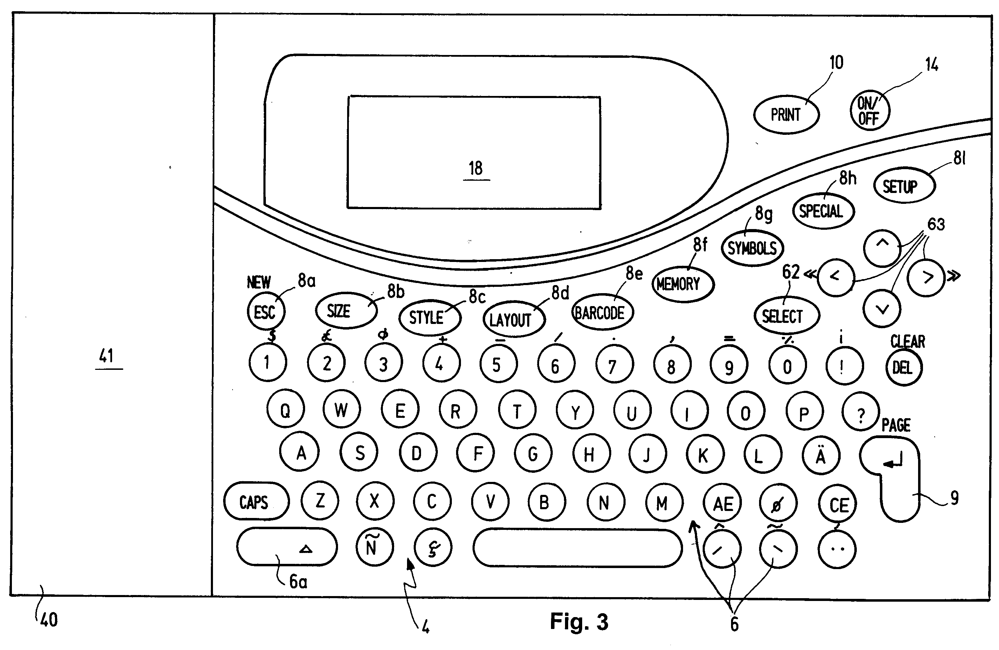

Since the labels shown in Figures 1 and 2 have already been described above, reference is now made to Figure 3. Figure 3 shows a simplified plan view of a tape printing apparatus comprising a keyboard 4. The keyboard 4 has a plurality of data entry keys and in particular comprises a plurality of numbered, lettered and punctuation keys 6 for inputting data to be printed as a label and function keys 8a-i for editing the input data. These function keys 8a-i are arranged for example to change the size or font of the input data. Additionally, these function keys 8a-i also allow, amongst other functions, underlining and boxing of the label to be achieved. The functions associated with some of the function keys will be described in detail hereinafter. The keyboard 4 also comprises a print key 10 which is operated when it is desired that a label be printed. Additionally, the keyboard 4 also has an on/off key 14 for switching the label printing apparatus 2 on and off.

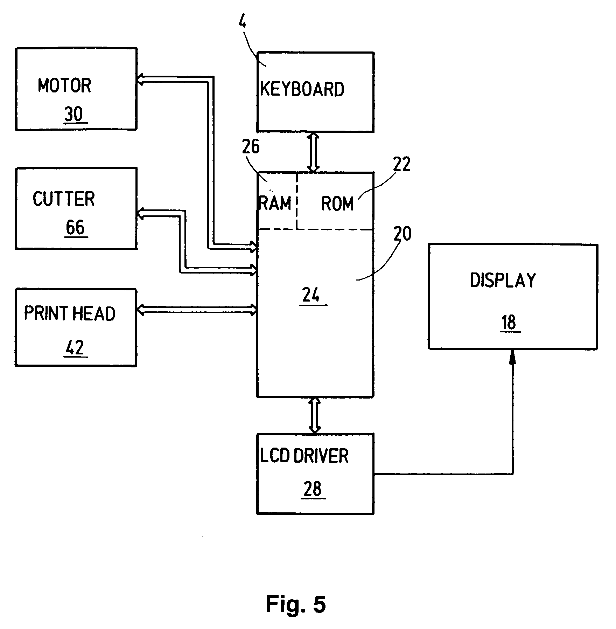

The tape printing apparatus also has a liquid crystal display (LCD) 18 which displays the data as it is entered. The display 18 allows the user to view all or part of the label to be printed which facilitates the editing of the label prior to its printing. As will be diescussed in more detial hereinafter, the display is also arranged to display various editing options which are selectable by the user. Additionally, the display 18 can also display messages to the user, for example, error messages or an indication that the print key 10 should be pressed or activated. The display 18 is driven by a display driver 28 which can be seen in Figure 5.

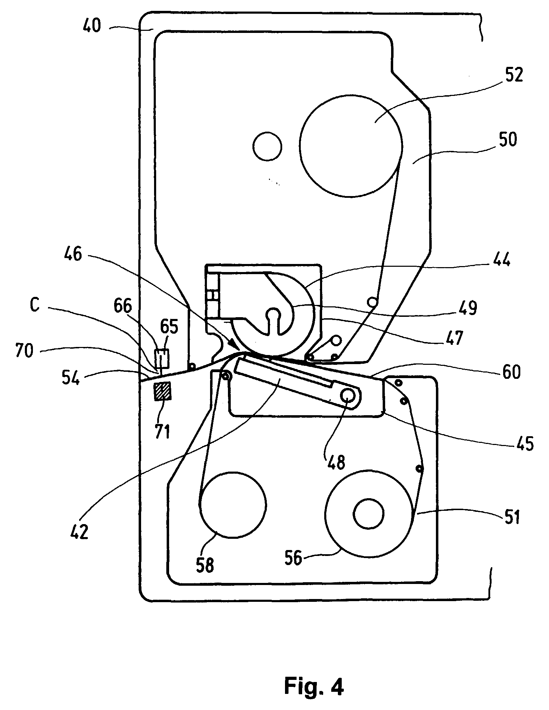

Next to the keyboard 4 of the tape printing apparatus there is a cassette receiving bay 40 which is arranged to receive two casssettes 50,51. The cassette receiving bay 40 has a lid 41 which is normally closed. Figure 4 shows the interior of the cassette receiving bay with the lid 41 removed. The cassette receiving bay 40 includes a thermal print head 42 and a platen 44 which cooperates to define a print zone 46. The platen 44 is moutned for rotation within a cage moulding 49. The print head 42 is privatable about a pivot point 48 so that it can be brought into contact with the platen 44 for printing and moved away from the platen 44 to enable the cassettes 50,51 to be removed and replaced. The first cassette inserted into the cassette receiving bay 40 is denoted by reference numeral 50. This cassette 50 holds a supply spool 52 of image receiving tape 54. The image receiving tape 54 comprises an upper layer for receiving a printed image on one of its surfaces and has its other surface coated with an adhesive layer to which is secured a releasable backing layer. The image receiving tape 54 is guided by a guide mechanism (not shown) through the cassette 50, out of the cassette 50 through an outlet 0, past the print zone 46 to a cutting location C. The platen 44 is accommodated in a recess of the first cassette 50. The second casette 51 has a supply of ink ribbon 60 on an ink ribbon supply spool 56 and a ink ribbon take up spool 58. The second cassette 51 also has a recess 45 for receiving the print head 42. The image receiving tape 54 and the ink ribbon 60 are arranged to pass in overlap between the print head 42 and the platen 44. In particular, the image receiving layer of the miage receiving tape 54 is in contact with the ink ribbon 60. The ink ribbon 60 is a thermal transfer ribbon which when in contact with the activated or heated elements of the print head 42 defines an image on the image receiving tape 54.

The platen 44 is driven by a motor 30 (see Figure 5), for example a dc motor or a stepper motor so that is rotates to drive the image receiving tape 54 in a direction which is parallel to the lengthwise extent of the image receiving tape 54 through the print zone 46. In this way, an image is printed on the image receiving tape 54 and the image receiving tape 54 is fed from the print zone 46 to the cutting location C. The rotation of the platen 44 also causes the ink ribbon 60 to be driven from the ink ribbon supply spool, past the print head 42, and to the ink ribbon take up spool 58.

A cutting arrangement 66 is provided which includes a cutter support member 68 which carries a blade 70. The blade 70 acts against an anvil 71.

Figure 3 shows the basic control circuitry for controlling the tape printing apparatus of Figures 3 and 4. There is a microprocessor chip 20 having a read only memory (ROM) 22, a microprocessor 24 and a random access memory capacity indicated diagrammatically by RAM 26. The microprocessor 24 is controlled by programming stored in the ROM 22 and when so controlled acts as a controller. It should be appreciated that the microprocessor chip can be replaced by a separate microprocessor, a separate RAM and a separate ROM.

The microprocessor chip 20 is connected to receive label data input to it from the keyboard 4. The microprocessor chip 20 outputs data to drive the display 18 via the display driver chip 28 to display a label to be printed (or a part thereof) and/or message or instructions to the user. The display driver 28 may form part of the microprocessor chip 20. Additionally, the microprocessor chip 20 also outputs data to drive the print head 42 which prints an image onto the image receiving tape 54 to form a label. Finally, the microprocessor chip 20 also controls the motor 30 for driving the image receiving tape tape 54 through the tape printing apparatus. The microprocessor chip 20 may also control the cutting mechanism 66 to allow lengths of image receiving tape 54 to be cut off after an image has been printed thereon. Alternatively, the cutting mechanism may be manually operable.

The tape printing apparatus allows labels to be composed and displayed on the display 18 using the various keys. In particular, the ROM 22 stores information relating to alphanumeric characters and the like which are associated with respective ones of the keys 6 as well as information relating to the functions associated with the function keys 8a-i. When a key 6 is depressed, data concerning the associated character or the like is retrieved from the ROM 22 and then stored in the RAM 26. The data stored in the RAM 26 may be in the form of a code which identifies the character. The microprocessor 24, in accordance with the data stored in the RAM 26 generates pixel data which is transmitted in one form column by column to the print head 42 and to the display 18 in another form. It should be appreciated that the displayed image and the printed image may differ only in their resolution in some embodiments of the present invention. Additionally data concerning a function may be retrieved from the ROM 22 in response to activation of one or more of the function keys 8a-i. That data may take the form of one or more flags. The pixel data generated by the microprocessor 24 and sent to the print head 42 and the display 18 will take into account the data relating to one or more functions stored in the RAM 26. As will be appreciated, the function keys 8a-i of the keyboard 4 have predetermined functions associated therewith which causes predetermined data associated with that function to be retrieved from the ROM 22 and/or RAM 26. Some of the functions may allow information to be stored in the RAM 26.

Reference will now be made to the keyboard of Figure 3 which, as previously mentioned, has a plurality of data entry keys 6 which are used to input an image or message to be printed on the image receiving tape 54 to thereby design a label. The keyboard 4 also has a plurality of function keys 8a-i. The function associated with the relevant ones of these keys will now be described in turn.

Key 8a has two functions associated therewith. Firstly, when the key 8a is activated alone and no other keys are activated at the same time, an 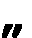 escape" function is provided. This key 8a allows the user to exit from the menus displayed when any of the keys 8a-i are activated to return the display 18 to a state in which the user can enter character data, etc. defining an image to be printed on the image receiving tape and the entered character data or the like is displayed on the display 18. In other words, it allows the user to return to the normal data entry mode in which an image to be printed can be entered. It should be appreciated that if the escape key 8a is activated, changes made to the values of any parameters will be ignored and the values of the parameters will revert to the values which were selected immediately before the activation of the fucntion key 8b-i concerned and the calling up of the associate menu. Also associated with key 8a is a 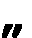 new" function. When the shift key 6a is activated at the same time as key 8a, this clears the previously entered message or image and a new message or image can be input by the user.

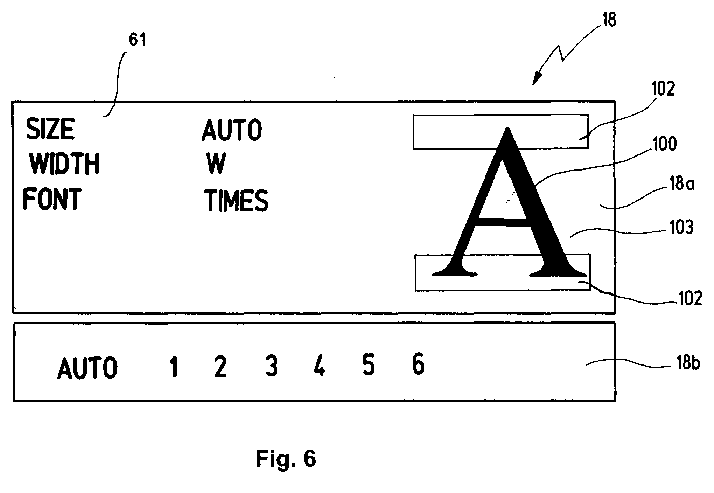

Key 8b, which will be referred to as the size key, allows a user to select the value of three different parameters. In particular, values can be assigned to the character font parameter, character size parameter and character width parameter. When the size key 8b is depressed, the menu shown in Figure 6 is displayed on the display 18. As can be seen from Figure 4, the display 18 is divided into two sections, 18a and 18b. In the upper section 18a, the three parameters mentioned above and their current user selected values are displayed. We refer first to the size parameter. As can be seen, the size parameter is highlighted by the cursor 61 in Figure 6 and accordingly, the available size options which can be selected by the user are displayed in the lower section 18b of the display 18. The user can change the currently selected size value (ie. Auto) by pressing the select key 62. The current user selected size value will be replaced by the next value displayed in the lower part 18b of the display. Thus, on activation of the select key 62, size 1 would be the user selected size and is displayed as such in the upper part 18a of the display. As will be appreciated, 1 to 6 represent suitable sizes with 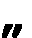 1" being the smallest and 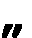 6" being the largest. Each activation of the select key 62 will cause a different size value to be the currently selected value. The select key 62 is thus activated repeatedly until the desired size value is the user selected size.

It should be appreciated that one of the options for the value of the size parameter is AUTO. When the AUTO value is selected, the character size will be selected in accordance with a user selected tape width. However in some embodiments of the invention the character size can be selected in accordance with the actual width of the image receiving tape of the image receiving tape present in the cassette receiving bay 40.

In order to change the value of the width of font parameter, the cursor keys 66 are activated until the width or font paramterer respectively is highlighted by the cursor 61. The options or values displayed in the lower part 18b of the display 18 will then be the various width or font options available to the user for the highlighted parameters. The currently selected value for the width and font are indicated in the upper part of the display 18 next to the words 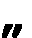 width" and 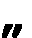 font" respectively. In a similar manner to that outlined in respect of the size parameter, the width or font value can be selected by one or more activations of the select key 62. The font values are 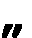 Times" and 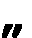 Helv" which represent different fonts whilst the width values are represented by three letters 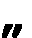 W", each of which has a different width representing the width of the character.

Additionally, on the right hand side of the upper part 18a of the display 18 is a sample character 100. The sample character has only the size, font and width values currently selected by the user for the characters to be input by the user and subsequently printed. In other words, the sample character 100 only reflects the values of those parameters which are selectable via this menu. The character displayed is, as mentioned above, a sample character which in the present case is the letter A. However, any other letter or letters may constitute this sample display.

Additionally, upper and lower bars 102 are superimposed over part of the sample character 100 on the display 18. A clear area 103 is provided between those bars 102 and this provides an indication to the user of a user selected tape width. Thus, it is clear to the user when the selected value of the size parameter is such that the character is too large for the user selected width of image receiving tape 54. In this context, reference is made to our co-pending patent application GB 9614143.7, the contents of which being incorporated herein by reference. Alternatively, the bars 102 may reflect the actual width of image receiving tape present in the cassette receiving bay 40. This width can be detected as described in EP-A-0 534 794 or EP-A-0 592 198 wherein tape width representation means of a cassette are detected or EP-A-0 574 165, which proposes to have multiple light barriers detecting the presence of the tape at different locations.

Thus it is clear to the user when the selected value of the size parameter is such that the character is too large for the current width of image receiving tape 54 present in the cassette receiving bay 40. In some circumstances, the user may intentionally select a character size which is larger than the width of the image receiving tape currently in the cassette receiving bay 40 so that a label for a larger width of image receiving tape can be stored for later printing on that larger or smaller width of image receiving tape.

In order to remove the menu shown in Figure 6 from the display and confirm the selected values for the size, width and font parameters, the return key 9 is acuated. If the escape key is actuated as discussed above, then the menu shown in Figure 6 is removed from the display 18 and the values of the size, width and font parameters revert to those which were selected immediately prior to the actuation of the size key 8b.

Now reference is made again to the label shown in Figure 1. When the user inputs the character data for this label, he presses the keys A,B,D, return (key 9), D,E, return, G,H. The return indicates the begin of a new line. Since the tape width of the label of Figure 1 is 19 mm, maximally four lines can be printed simultaneously, ie. one below the other onto the tape. The tape printing apparatus incorporates this restriction since a fifth line would suffer from the limited resolution of the print head, thus it would be to small to read. Consequently, a fifth line would instead be shifted into a new page, and printed on the right hand of the first four lines onto the label, like the 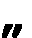 C" in Figure 12.

The size parameter of all characters in Figure 1 is Auto. Thus, the microprocessor 24 is controlled such that the size of the characters corresponds to 1/3 of the available space on the label, wherein the available space is the remaining tape width after the upper and lower margins on the edges of the label and the blank parts between adjacent lines have been subtracted. Like already indicated, the tape width can be user inputted, or be automatically determined.

It would be possible to assign a fixed size to all characters. Then, the size key 8b would be depressed, and the desired size selected as described above. This would affect all characters. It should be noted that the same label as the one shown in Figure 1 would be obtained when instead of a size parameter Auto, a fixed size with a size parameter of 2 had been selected. The logic behind this is that on a 19 mm tape, maximally four lines can be printed simultaneously. Thus, a selection of four different sizes is possible: 1, 2, 3, and 4. The options 5 and 6 for the fixed size are theoretically possible as well, but correspond to character sizes which would not fit onto the tape, thus do not make sense. The size 1 is the smallest one, and corresponds to 1/4 of the available tape width. Size 2 corresponds to 1/3 of the available tape width, size 3 corresponds to 1/2 of the available tape width, and size 4 corresponds to the entire available tape width. For a 12 mm tape, maximally two lines can be printed simultaneously, thus two fixed sizes are available: size 1 corresponding to 1/2 of the available tape width, and size 2 correspoding to 1/1 of the available tape width. A 6 mm tape can only accomodate one line, and only size 1 corresponding to the entire available tape width is possible. For a 32 mm tape, six lines are possible, and consequently eg. the size 2 corresponds to 1/5 of the available tape width. Thus, the largest possible fixed size parameter for a certain tape width corresponds to the maximal number of lines which can be accomodated on this tape width. This largest possible fixed size parameter corresponds to one line, while the lower numbers correspond in decreasing order to 1/2, 1/3, etc. of the tape width.

It should be mentioned that when the tape width is altered, the fixed size parameters remain the same, ie. the size 2 corresponding to 1/3 of the available tape width for a 19mm label gets size 2 for a 12 mm label, ie. corresponds to the entire tape width of 12 mm. Analoguously, when 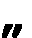 Auto" is selected, the size of the characters is determined according to the tape width and line number.

It is not only possible to have global sizing, ie. to give all inputted characters a fixed or an automatically determined size, but to have labels with so-called mixed sized characters. When it is desired to print one line with larger or smaller characters than the lines above or below, the user marks the respective parts of the text, by moving the cursor 61 by means of the cursor keys 63 onto the leftmost (or rightmost) character of the characters concerned, presses the select key 62 (in order to mark the text) and moves the cursor by means of the cursor keys to the rightmost (or leftmost) character of the characters to be marked. Then, the marked characters indicated on the display 18, eg. inversely displayed or blinking. The user now depresses the size key 8b, and selects the desired fixed size, as described above. A fixed size is assigned to the marked characters, and those entered afterwards into the region which had been marked. It should been mentioned that when no text has been marked, an inputted fixed size is assigned to the next characters which are entered. The default is Auto, thus when no fixed size is assigned to a character, its size is determined automatically.

In the label shown in Figure 2, the characters A and B have been assigned a size corresponding to 1/2 of the available tape width, ie. to a size corresponding to size 3 in the menu shown in Figure 6. This label was produced with a prior art tape printing apparatus, which sizes all automatically sized characters within the same page (part of a label printed in adjacent lines, one below each other) to the same size. Thus, the C is much smaller than the A and the B within the same line.

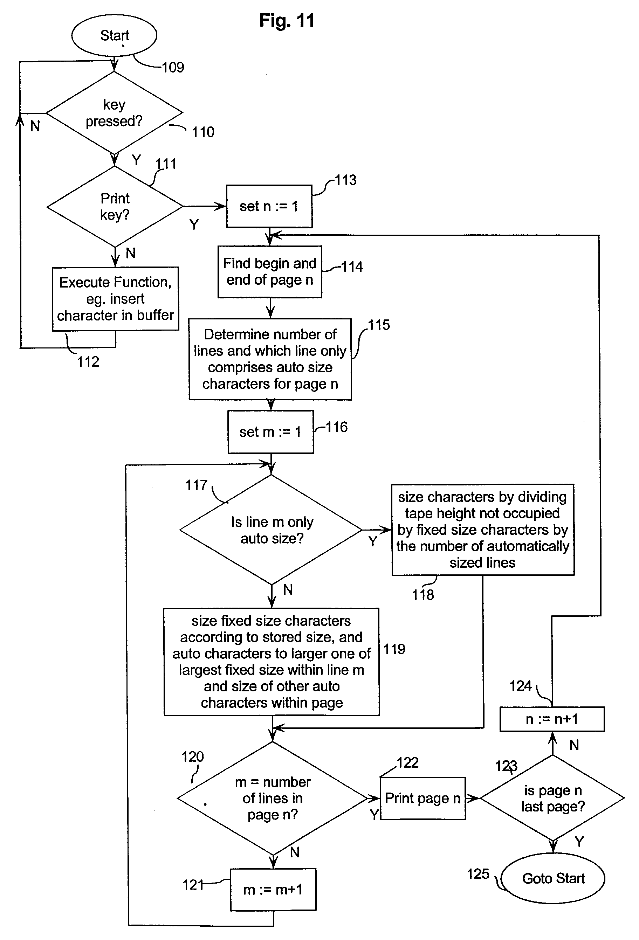

In Figure 7, a label produced with a tape printing apparatus according to the present invention is shown. The size parameters are the same as in the label of Figure 2, ie. A and B are assigned to a fixed size with a size parameter of 3, while the remaining characters are automatically sized, ie. have 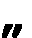 Auto" as size parameter. In Figure 7, the C has however automatically obtained the same size as the remaining characters on the first line, which have a fixed size. Consequently, the appearance of the label has been improved. As will be appreciated, the display 18 also indicates the sizes of the characters, since it is a WYSIWYG display. The inputted characters are displayed with a size which is proportional to the size with which they are printed.

When the user indeed wanted to have a label as in Figure 2, he could simply mark the C, and assign a fixed size to it, with a size parameter of 2. Consequently, when he wants to have different sized characters within the same line, he must actively instruct the tape printing apparatus. Thus, the invention avoids a possibility of input errors, and consequently waste of tape.

The labels in Figures 8-10 have been produced with a tape printing apparatus according to the present invention, as well. The characters A and B have fixed size, and C and D are automatically sized. In Figure 8, the characters A and B have a size parameter of 3 (corresponding to 1/2 of the available tape width), and the automatically sized characters have the same size, since two lines are printed onto the label of 19 mm width. In Figure 9, the characters A and B have a size parameter of 2 (corresponding to 1/3 of the available tape width), and the automatically sized characters are larger, since their size corresponds to 1/2 of the available space on the tape incorporating two lines. In Figure 10, the characters A and B have a size parameter of 1 (corresponding to 1/4 of the available tape width), and the automatically sized characters are larger, since their size corresponds to 1/2 of the available space on the tape incorporating two lines. It should be noted that the labels in Figures 8-10 would look the same when they were produced with a prior art tool, as the Dymo 6000.

Figure 11 is a flow diagram and shows how the microprocessor 24 of the tape printing apparatus determines the size of the characters printed onto the tape. After start in step 109, it is investigated in step 110 whether a key was depressed or not. When this is the case, step 111 follows. Otherwise, step 110 is executed again. In step 111 it is investigated whether the print key 9 was depressed. When this is not true, step 112 follows, in which the function associated with a depressed key is executed. For example, a character can be stored in the input buffer (which is a part of the RAM 26) when a corresponding character key was depressed. Analoguously, actuation of one of the function keys 8a-i makes the microprocessor 24 display the respective menus on the display 18. When this function has been executed, step 110 follows again.

When step 111 reveals that the print key has been depressed, step 113 follows. In this step an integer n is set to 1, n standing for the number of the actual page to be printed. A page is constituted of a number of lines (or a single line) to be printed one above the other. The labels in Figures 1, 2 and 7-10 each only comprise one page. Pages are illustrated in the label of Figure 13. Here, the first page comprises the characters A and B (in two lines), and the second page corresponds to the character C (one line only). The printing process is thus carried out page by page, since the pages can have different lineages. Consequently, step 113 indicates that the first page is printed in the first place. In following step 114 first of all the begin and end of the actual page n is retrieved. This is performed by searching the input buffer forming part of RAM 26, in which informations on the characters inputted by the user, their size, return characters, and the attributes (bold, shadow, italics, etc.) of the characters is stored during the inputting operation. Once the begin and end of the actual page is found, step 115 follows, in which the number of lines within the actual page is determined. Further, for each line it is investigated whether it consists only of automatically sized characters, or comprises fixed size characters. The next steps are carried out line by line. The actually investigated line number is indicated by the integer m. Consequently, in following step 116, the number of the actual line m is set to 1, ie. the first line is dealt with in the first place. Step 117 investigates whether the actual line m only contains characters with a size parameter set to Auto. When this is true, the normal sizing operation for automatically sized characters is performed in step 118. This means that the characters within the actual line m are sized by dividing the tape height which is not occupied by fixed size characters (ie. the available tape height for auto size characters) by the number of lines having automatic sizing. For example, when four automatically sized lines are available, and alltogether four lines are to be printed, the size is determined by dividing the tape width (excluding upper and lower margins on the tape edge) by four. In the example of Figure 7, the second and third line would be sized according to step 118, thus 1/2 of the available tape width (since the other 50% of the tape width are occupied with the first line containing fixed size characters) would be divided by two (since two lines are autosized, the second and third one), yielding a height of 1/4 of the available tape width. When the actual line m contains fixed size characters, the size of the characters is determined according to step 119. In this step, the fixed size characters are simply sized according to their user determined size. When the line additionally contains an automatically sized character (ie. to which the size parameter 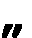 Auto" has been assigned), the largest one of the fixed sizes within the actual line m is compared with the size of the other characters within the same page, to which an 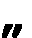 Auto" size parameter has been assigned, and which are located in a line comprising only 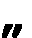 Auto" sized characters. The larger one of these two sizes is assigned to the automatically sized character. This yields the result of Figures 7 to 10. In Figure 7, the fixed size of characters A and B is larger than the size of the automatically sized characters D,E,G and H. Thus, the C obtains the size of the fixed size characters A and B. On the other hand, in Figure 8 the size of the A and B is the same as the size of the D, thus the C gets the same size as the D. In Figure 9 and 10, the A and B are even smaller than the D, hence the C gets the same size as the automatically sized D. When the page does not contain any line without fixed size characters, the automatically sized characters simply obtain the size of the largest fixed size character within the same line. After steps 118 or 119, the size of all characters within the actual line m is determined. This means that an information on the correct printing size is stored in the RAM. After both ones of steps 118 and 119, step 120 follows, which investigates whether the actual line m is the last one of the actual page. When this is not the case, step 121 follows, in which m is incremented by one, ie. the next line is taken into account. After step 121, step 117 is executed again.

When the size of all lines within the actual page n has been determined, step 122 is executed, wherein the actual page is printed out. Alternatively, a corresponding dot pattern could be written into a print buffer, which is sent to the print head 42 when it has been filled with data of the entire label.

The printing process can be carried out as described in our EP-A-0 574 225, the contents of which being incorporated herein by reference. Thus outline data (Bezier) are stored in the ROM 22, sized according to a scaling factor (determined in steps 118 resp. 119) and converted into dot pattern data, which are sent print column wise to the print head 42. The same outline data may be used for display purposes, as well. The corresponding scaling factors for the display 18 are determined with routines corresponding to steps 113 to 124, ie. with the same size relations as for printing as for displaying. It should be noted that it would be possible to store dot pattern fonts for display and/or printing purposes with different sizes, as well, but this requires a relatively high amount of storage capacity. In the latter case, the dot pattern with the appropriate size would be recalled according to the size determined in step 118 or 119.

After printing the actual page n, step 123 follows, in which it is investigated whether page n was the last page. When this is true, step 125 follows which returns to start, step 109. Otherwise, the next page is dealt with, thus in step 124 n is incremented for 1, and step 114 follows again.

## Claims

1. A printing apparatus comprising:
means for inputting characters to be printed onto an image receiving medium;
character size data inputting means for selecting the size with which the inputted character data are printed, the character size data inputting means being operable to assign a fixed size to selected characters; the character size data inputting means further being operable to assign an automatically determined size to selected characters;
printing means for printing the inputted characters onto the image receiving medium,
a controller (24) for controlling the printing means, the controller being operable to control the printing means to print the characters with automatically determined size onto the image receiving medium, whereby the automatically determined size depends on a lineage and a width of the image receiving medium, the controller further being operable to control the printing means to print characters with a fixed size according to the selected fixed size onto the image receiving medium, characterized in that the controller (24) is operable to control the printing means to print characters with an automatically determined size which are located within a line with characters with a fixed size, with a size corresponding to the larger one of
(a) the size of the largest character with fixed size within the same line, and
(b) the size of characters with automatically determined size.

2. A printing apparatus according to claim 1, wherein the size (b) is the size of characters with automatically determined size which are located in a line comprising only characters with automatically determined size.

3. A printing apparatus according to claim 1 or 2, wherein the size (b) is the size of characters with automatically determined size within the same page, a page being constituted of one or more lines arranged one above the other, and different pages having optionally different lineages.

4. A printing apparatus according to one of claims 1 to 3, wherein the controller (24) is operable to control the printing means to print the characters with automatically determined size which are located within lines comprising only characters with automatically determined size onto the image receiving medium, with a size obtained by dividing the height of the image receiving medium which is not occupied by lines with characters with a fixed size and the number of lines comprising only characters with automatically determined size.

5. A printing apparatus according to claim 3 or 4, wherein the controller (24) is operable to control the printing means to print characters to which an automatically determined size is assigned, and which are located within a line comprising with characters to which a fixed size is assigned, with a size of the largest fixed size character within the same line, when the page does not comprise any line without fixed size characters.

6. A printing apparatus according to one of claims 1, 2 or 4, wherein the controller (24) is operable to control the printing means to print characters to which an automatically determined size is assigned, and which are located within a line comprising with characters to which a fixed size is assigned, with a size of the largest fixed size character within the same line, when the image does not comprise any line without fixed size characters.

7. A printing apparatus according to one of claims 1 to 6, comprising means for inputting the width of the image receiving medium.

8. A printing apparatus according to one of claims 1 to 6, comprising means for detecting the actual width of the image receiving medium.

9. A printing apparatus according of one of claims 1 to 8, wherein the controller (24) controls the printing means to print characters to which no fixed size is assigned with an automatically determined size.

10. A printing apparatus according to one of claims 1 to 9, comprising a display (18) on which the inputted characters are displayed with a size proportional to the size with which they are printed.

11. A printing apparatus according to one of claims 1 to 10, wherein the controller (24) is operable to convert stored outline data under application of a scaling factor into dot pattern data which are printed by the printing means.

12. A printing apparatus according to one of claims 1 to 11, wherein the character size data inputting means are operable to select a fixed size stepwise, wherein the number of available steps for a certain width of the image receiving medium depends on the number of lines which can be accomodated on the image receiving medium.

13. A printing apparatus according to one of claims 1 to 12, wherein the image receiving medium is an image receiving tape (54).
